# EUROPEAN PATENT SPECIFICATION

(11) **EP 1 966 295 B1**
(45) Date of publication and mention of the grant of the patent: **18.07.2012**
(21) Application number: 06830735.4
(22) Date of filing: 20.12.2006
(51) Int. Cl.: C08K 5/00, C08L 67/02, C08L 23/10, B07C 5/34

(54) **METHOD FOR SORTING AND RECYCLING POLYPROPYLENE ARTICLES**
VERFAHREN ZUM SORTIEREN UND RECYCELN VON POLYPROPYLENARTIKELN
METHODE DE TRIAGE ET DE RECYCLAGE D'ARTICLES EN POLYPROPYLENE

(30) Priority: 20.12.2005 EP 05112516
(43) Date of publication of application: 10.09.2008
(73) Proprietor: Total Petrochemicals Research Feluy, 7181 Seneffe (Feluy) (BE)
(72) Inventor: HUMBEECK, Emmanuel, B-7181 Seneffe (Feluy) (BE)
(74) Representative: Leyder, Francis
(86) International application number: PCT/EP2006/069959
(87) International publication number: WO 2007/071702

(56) References cited:
- EP-A- 0 251 340
- EP-A- 0 476 416
- EP-A- 0 700 961
- WO-A-03/101755
- DATABASE WPI Section Ch, Week 200468 Derwent Publications Ltd., London, GB; Class A23, AN 2004-693443 XP002385327 -& JP 2004 263106 A (TOYOBO KK) 24 September 2004 (2004-09-24)
- DATABASE WPI Section Ch, Week 199439 Derwent Publications Ltd., London, GB; Class A23, AN 1994-313810 XP002385328 -& JP 06 240045 A (MITSUI TOATSU CHEM INC) 30 August 1994 (1994-08-30)

## Description

This invention relates to the field of efficiently sorting injection-stretch-blow-moulding bottles in view of recycling.

For ecological reasons, a lot of emphasis has been placed on the recycling of plastic articles and in the near future, new regulations may force an increasing fraction of all plastics sold to be recycled.

Most recycling was tedious and lengthy as articles prepared from different materials had to be recycled separately because they were not compatible. For example, polyethylene terephthalate (PET) and polypropylene (PP) or polyethylene (PE) could not be recycled together. Reclaimed material is most valuable when it is pure and it must therefore be sorted prior to recycling.

In the past, many containers, whether for food applications or for cosmetic or detergent applications, were prepared by Injection-Stretch-Blow-Moulding (ISBM) from polyethylene terephthalate (PET). Some articles were also prepared by blow moulding from polyethylene resins. All these articles were sorted either manually or automatically.

In case of manual sorting, articles were hand picked from the sorting line and operators used sample features to identify their nature. The manual separation was based principally on shape recognition and level of transparency, PE being much less transparent than PET. Also, some brand names use bottles having a precise shape and prepared from a precise resin generally always the same. The workers, who had no chemical knowledge, thus sorted the articles by shape.

There were many reasons for inaccurate separation of the different resins: human errors or change in material from the container-producing firms or co-existence for a single product of several variants, or composite containers having for example the bottle prepared from one resin and the top prepared from another resin, all led to a non negligible amount of mixing.

The mechanical separation was based on shape recognition and high speed X-ray and infra-red sensors. They could also be sent in a bath of water and separated by density differentiation whereby the PET or polyvinyl chloride (PVC) being denser than water would sink and the polyethylene and polypropylene that were lighter than water would float. The products then had to be dried.

These procedures were not only lengthy, but they were also inaccurate and a non-negligible fraction of unwanted polymer inevitably missed detection during the sorting procedure. For fractions of unwanted polymers or contaminants, the recycled resin had significantly lost mechanical properties and the whole batch was thus not directly usable.

To add to this difficulty, polypropylene has recently proven very attractive in the field of rigid solid packaging and it is progressively replacing PET in ISBM applications. The articles prepared from polypropylene have remarkable optical properties: they have an excellent transparency throughout their whole body. In addition, they have a number of desirable properties such as for example low water vapour permeability, good squeezability, warm touch, outstanding engraving capability and excellent heat resistance allowing for example hot filling, microwave heating or sterilisation.

The introduction of polypropylene in the field of ISBM has further allowed the development of new markets: for example polypropylene articles can advantageously replace articles prepared from glass or cardboard.

Most recycling facilities today operate manually and are best equipped to separate PET from PE articles but are not equipped to sort PP articles. To make matters worse, ISBM PP articles now can be made to have the same appearance as PET articles, thereby making sorting very difficult.

There is thus a need to develop a simple and accurate method for sorting PET and polypropylene in view of recycling.

It is an aim of the present invention to provide a fast and accurate method for sorting PET and polypropylene bottles in view of recycling.

Subject-matter of the present application are uses, products and methods according to the attached claims 1-7.

It is also an aim of the present invention to provide recycled polypropylene and PET resins containing no or little contaminants.

Accordingly the present invention discloses the use of a composition comprising a homo- or a co-polymer of propylene and a tracer additive for the accurate sorting of polypropylene articles, in the recycling of PET and polypropylene bottles.

According to the present invention the PET and polypropylene bottles are prepared by injection-stretch-blow-moulding (ISBM).

The tracer additive is selected to allow easy automatic detection. In addition it must not interfere with the mechanical properties of the finished articles. The tracer additive according to the present invention is a UV tracer that is a fluorescent whitening agent. The fluorescent agents absorb invisible UV radiations in the wavelength range of about 360 to 380 nm, converting it to longer wavelength and re-emitting it as a visible blue or violet light. In order to achieve maximum effectiveness, the fluorescent agent must be fully dissolved and homogeneously distributed in the finished article: sufficient compatibility is thus necessary.

The fluorescent agents according to the present invention have a series of conjugated unsaturations and are selected from bis-benzoxazole of formula I 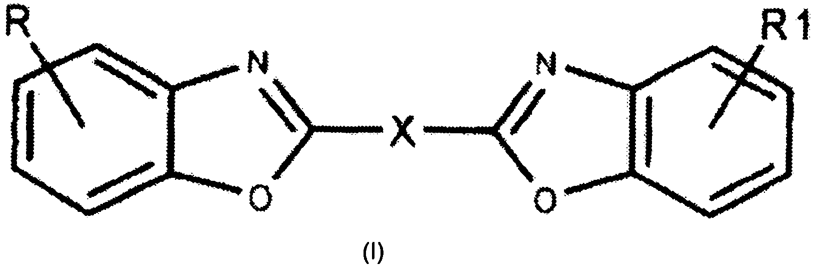 or from phenylcoumarin of formula II 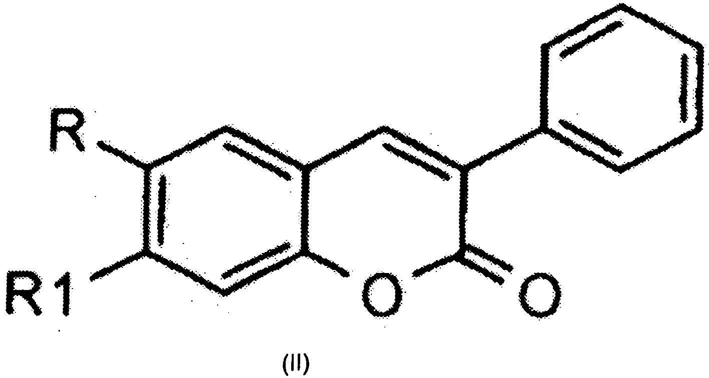 or from bis-(styril)biphenyl of formula III 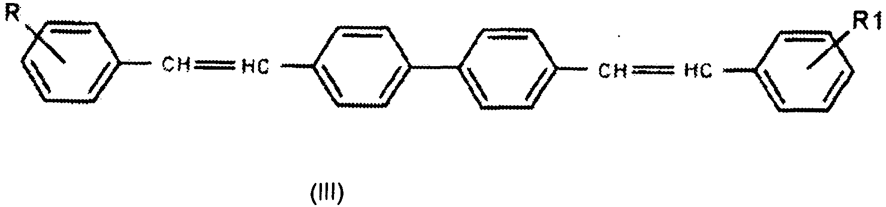 wherein R and R1 are each independently selected from hydrocarbons having from 1 to 12 carbon atoms and X is a system of conjugated double bonds such as for example furane, thiophene or pyrrole.

The most preferred fluorescent agent used in the present invention is represented by formula

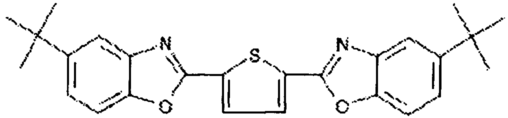

The fluorescent agent is incorporated into the thermoplastic mass before the forming process: it is typically introduced by extrusion with polypropylene powder and other additives.

The amount of fluorescent agent necessary to allow easy detection is of from 0.1 to 100 ppm, preferably of from 1 to 10 ppm, and more preferably of from 2 to 5 ppm.

The polypropylene that can be used in the present invention is not particularly limited and can be prepared by any method known in the art, such as for example with a Ziegler-Natta or a metallocene catalyst system. It may be a homopolymer, a random copolymer of propylene or a block copolymer of propylene and other olefins such as ethylene. The melt index is not particularly limited and depends upon the desired final object. It is of 0.3 to 150 dg/min, preferably of from 1.5 to 100 g/10 min, more preferably of from 2 to 30 g/10 min and most preferably from 10 to 20 g/10min. When it is a copolymer of propylene, the preferred comonomer is ethylene and the amount of ethylene present in the resin is of at from 0.3 to 7 wt%, preferably of from 2 to 5 wt%.

The melt flow index MFI is measured using the procedures of standard test ISO 1133 at 230 °C for homo- or co-polymers of propylene and under a load of 2.16 kg.

The polypropylene resin may additionally contain usual additives and nucleating agents.

The presence of the UV tracer in the polypropylene resin makes the sorting of ISBM PP articles very easy either manually or mechanically with appropriate detector. These articles are fluorescent when submitted to a simple fluorescent light source.

X-ray detectors, already present in sorting facilities, allow a first separation based on the presence or absence of chlorine: articles prepared from polyvinyl chloride (PVC) are thus separated from those prepared from PET, PP or PE. Among these remaining articles and in the case of transparent containers, those prepared from PE can be manually separated out because of their strikingly different level of transparency. The remaining PET and PP articles have a very similar appearance and are used in the same markets: thus they are difficult to differentiate visually. The addition of a UV tracer in PP resins allows their easy detection with a UV detector and thus PP articles can be separated out from the PET articles, based on the presence of the UV tracer.

The separation of PP and PET is thus easily achieved by the present invention.

The present invention also discloses a method for sorting transparent plastic bottles that comprises the steps of:
a) providing transparent bottles prepared from PE, PVC, PET and PP, wherein PP bottles are prepared from a polypropylene composition that includes a UV tracer;
b) providing an X-ray apparatus comprising a detector for a first separation based upon the presence or absence of chlorine;
c) manually sorting and removing the PE bottles based upon transparency;
d) providing a UV apparatus comprising a UV detector for the separation of PP bottles, based upon the presence of the UV tracer;
e) recovering separately polypropylene and PET bottles that are substantially free of contaminants.

All the resins sorted according to the present invention can then be recycled separately.

The reclaimed bottles obtainable by the method according to present system are substantially free of contaminants.

Reclaimed resins that contain no or little contaminants retain excellent mechanical properties. PET resins free of contaminants can for example be recycled in the field of fibres.

The present invention also describes polypropylene compositions that include a UV tracer additive and injection-stretch-blow-moulded bottles prepared from these polypropylene compositions.

The present invention can advantageously be extended to non-transparent articles. The separation between PET and PE thus cannot be based on transparency properties but on the blow moulding "seams" characteristically present in blow moulded PE articles.

### Examples.

UV tracer UVITEX® commercialised by CIBA has successfully been used, in an amount of 3 ppm, with a random copolymer of propylene, PPR 7225 commercialised by TOTAL PETROCHEMICALS.

## Claims

1. Use of a composition comprising a homo- or a co-polymer of propylene and a tracer additive for the sorting of injection-stretch-blow-moulded bottles made of said composition in view of recycling, wherein the tracer additive is a fluorescent agent of general formula I for bis-benzoxazoles 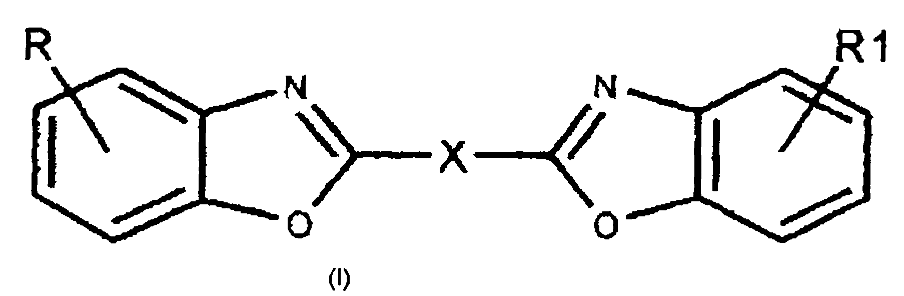 or formula II for phenylcoumarins 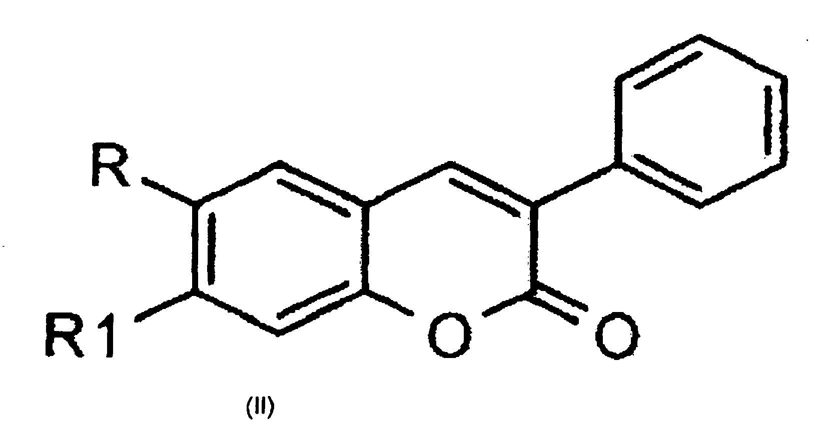 or formula III for bis-(styril)biphenyl 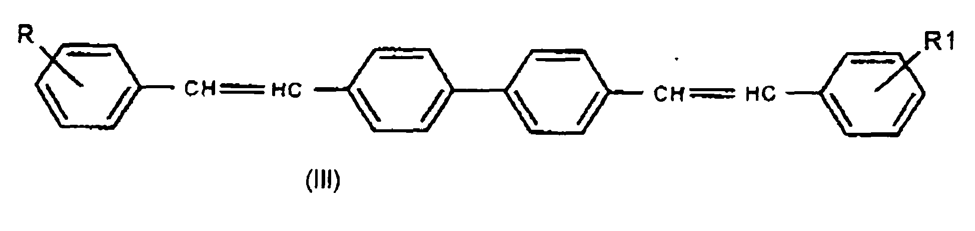 wherein R and R1 are each independently selected from hydrocarbons having from 1 to 12 carbon atoms and wherein X is a system of conjugated unsaturations.

2. The use of claim 1 wherein the fluorescent agent is represented by formula

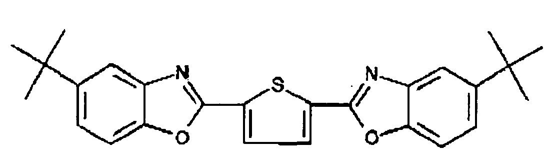

3. The use of claim 1 or claim 2 wherein the fluorescent agent is present in an amount of from 0.1 to 100 ppm.

4. The use of any one of the preceding claims wherein the polypropylene is a homopolymer or a random copolymer of propylene having a melt index of from 0.5 to 150 dg/min.

5. The use of any one of the preceding claims wherein the injection-stretched-blow-moulded bottles to be sorted are prepared from PET and PP.

6. A polypropylene bottle produced by injection-stretch-blow-moulding from a composition comprising a homo- or a co-polymer of propylene and a tracer additive according to any one of claims 1 to 5.

7. A method for automatic sorting of injection-stretch-blow-moulded bottles that comprises the steps of:
a) providing bottles prepared from PE, PVC or PET resins and the polypropylene bottles of claim 6;
b) providing an X-ray apparatus comprising a detector for a first separation based upon the presence or absence of chlorine;
c) manually removing the PE bottles based upon their level of transparency;
d) providing a UV apparatus comprising a detector for separating PP bottles from PET bottles, based upon the presence of the UV tracer additive; and
e) recovering polypropylene bottles substantially free of contaminants.

## Patentansprüche

1. Verwendung einer Zusammensetzung, umfassend ein Homo- oder ein Copolymer von Propylen und ein Traceradditiv, für das Sortieren von mittels Spritzstreckblasen hergestellten Flaschen, die aus der Zusammensetzung bestehen, im Hinblick auf Recycling, wobei das Traceradditiv ein fluoreszierendes Mittel der allgemeinen Formel I für Bis-benzoxazole 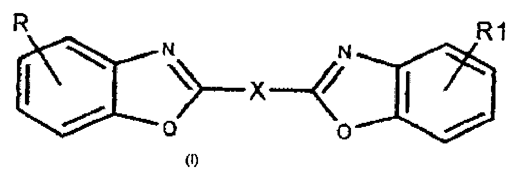 oder Formel II für Phenylcoumarine 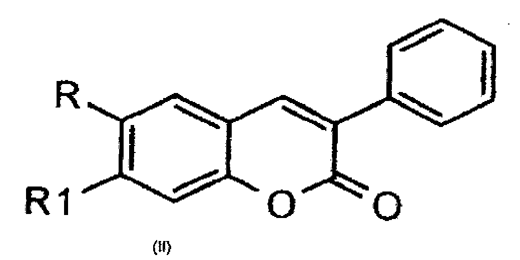 oder Formel III für Bis-(styril)biphenyl 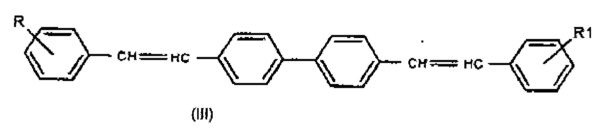 ist, wobei R und R1 jeweils unabhängig aus Kohlenwasserstoffen mit 1 bis 12 Kohlenstoffatomen ausgewählt sind, und wobei X ein System aus konjugierten Ungesättigtheiten ist.

2. Verwendung nach Anspruch 1, wobei das fluoreszierende Mittel durch folgende Formel repräsentiert ist:

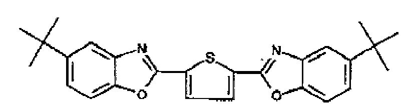

3. Verwendung nach Anspruch 1 oder 2, wobei das fluoreszierende Mittel in einer Menge von 0,1 bis 100 ppm vorhanden ist.

4. Verwendung nach einem der vorstehenden Ansprüche, wobei das Polypropylen ein Homopolymer oder ein Random-Copolymer von Propylen mit einem Schmelzindex von 0,5 bis 150 dg/min ist.

5. Verwendung nach einem der vorstehenden Ansprüche, wobei die mittels Spritzstreckblasen hergestellten Flaschen, die es zu sortieren gilt, aus PET und PP hergestellt sind.

6. Polypropylenflasche, die mittels Spritzstreckblasen aus einer Zusammensetzung, umfassend ein Homo- oder ein Copolymer von Propylen und ein Traceradditiv, nach einem der Ansprüche 1 bis 5 hergestellt ist.

7. Verfahren zum automatischen Sortieren von mittels Spritzstreckblasen hergestellten Flaschen, das die folgenden Schritte umfasst:
a) Bereitstellen von Flaschen, die aus PE-, PVC- oder PET-Harzen hergestellt sind, und der Polypropylenflaschen nach Anspruch 6;
b) Bereitstellen einer Röntgenvorrichtung, die einen Detektor für eine erste Trennung auf Basis des Vorhandenseins oder Nicht-Vorhandenseins von Chlor umfasst;
c) Manuelles Entfernen der PE-Flaschen auf Basis derer Transparenzhöhe;
d) Bereitstellen einer UV-Vorrichtung, die einen Detektor zum Trennen von PP-Flaschen von PET-Flaschen auf Basis des Vorhandenseins des UV-Traceradditivs umfasst; und
e) Gewinnen von Polypropylenflaschen, die im Wesentlichen frei von Kontaminanten sind.

## Revendications

1. Utilisation d'une composition comprenant un homo- ou un co-polymère de propylène et un additif traceur pour le triage de bouteilles moulées par injection étirage soufflage fabriquées à partir de ladite composition en vue du recyclage, dans laquelle l'additif traceur est un agent fluorescent de formule générale I pour les bis-benzoxazoles 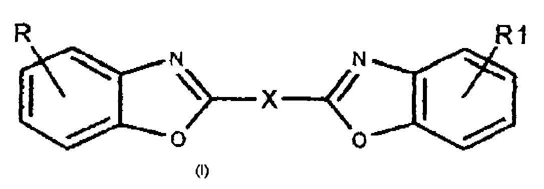 ou de formule II pour les phénylcoumarines 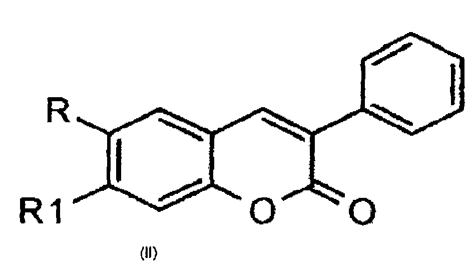 ou de formule III pour le bis-(styril)biphényle 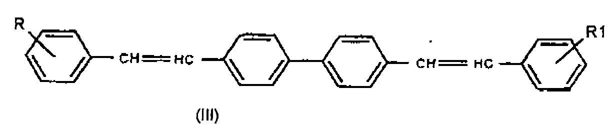 formules dans lesquelles R et R1 sont chacun indépendamment choisis parmi les hydrocarbures comportant de 1 à 12 atomes de carbone et dans lesquelles X représente un système d'insaturations conjuguées.

2. Utilisation selon la revendication 1, dans laquelle l'agent fluorescent est représenté par la formule

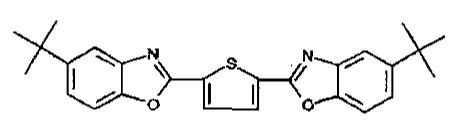

3. Utilisation selon la revendication 1 ou la revendication 2, dans laquelle l'agent fluorescent est présent en une quantité de 0,1 à 100 ppm.

4. Utilisation selon l'une quelconque des revendications précédentes, dans laquelle le polypropylène est un homopolymère ou un copolymère aléatoire de propylène ayant un indice de fluidité de 0,5 à 150 dg/min.

5. Utilisation selon l'une quelconque des revendications précédentes, dans laquelle les bouteilles moulées par injection étirage soufflage à trier sont fabriquées à partir de PET et de PP.

6. Bouteille en polypropylène produite par moulage par injection étirage soufflage à partir d'une composition comprenant un homo- ou un co-polymère de propylène et un additif traceur selon l'une quelconque des revendications 1 à 5.

7. Méthode de triage automatique de bouteilles moulées par injection étirage soufflage qui comprend les étapes consistant à :
a) fournir des bouteilles fabriquées à partir de résines de PE, de PVC ou de PET et les bouteilles en polypropylène selon la revendication 6 ;
b) fournir un appareil de radiographie comprenant un détecteur pour une première séparation basée sur la présence ou l'absence de chlore ;
c) retirer manuellement les bouteilles en PE d'après leur niveau de transparence;
d) fournir un appareil à UV comprenant un détecteur pour séparer les bouteilles en PP des bouteilles en PET, d'après la présence de l'additif traceur sensible aux UV; et
e) récupérer les bouteilles en polypropylène sensiblement dépourvues de contaminants.
